# EUROPÄISCHE PATENTSCHRIFT

(11) **EP 4 464 547 B1**
(45) Veröffentlichungstag und Bekanntmachung des Hinweises auf die Patenterteilung: **05.03.2025**
(21) Anmeldenummer: 23173842.8
(22) Anmeldetag: 17.05.2023
(51) Int. Cl.: B60L 58/24, F28F 3/12

(54) **TEMPERIERANORDNUNG UND VERFAHREN ZUR HERSTELLUNG EINER TEMPERIERANORDNUNG**
TEMPERATURE CONTROL ARRANGEMENT AND METHOD FOR PRODUCING A TEMPERATURE CONTROL ARRANGEMENT
SYSTÈME DE RÉGULATION DE TEMPÉRATURE ET PROCÉDÉ DE FABRICATION D'UN SYSTÈME DE RÉGULATION DE TEMPÉRATURE

(43) Veröffentlichungstag der Anmeldung: 20.11.2024
(73) Patentinhaber: Benteler Automobiltechnik GmbH, 33102 Paderborn (DE)
(72) Erfinder: FRISCHKORN, Conrad, 33102 Paderborn (DE); LANDERMANN, Lars, 32052 Herford (DE)
(74) Vertreter: Ksoll, Peter

(56) Entgegenhaltungen:
- DE-A1- 102020 107 366
- DE-B3- 102020 113 425
- US-B2- 10 608 305
- US-B2- 11 155 150
- US-B2- 11 239 512

## Beschreibung

Die vorliegende Erfindung betrifft eine Temperieranordnung mit den Merkmalen des Oberbegriffs von Anspruch 1.

Die Erfindung betrifft weiterhin ein Verfahren zur Herstellung einer Temperieranordnung mit den Merkmalen des Anspruchs 12.

Elektrisch angetriebene Fahrzeuge weisen üblicherweise Batteriemodule für die Bereitstellung der benötigten elektrischen Energie auf. Diese Batteriemodule sind zumeist in einem Batteriegehäuse angeordnet, welches zwischen den Achsen des Fahrzeugs angeordnet ist.

Um die in den Batteriemodulen gespeicherte Energie optimal nutzen zu können, müssen die Batteriemodule in definierten Temperaturbereichen gehalten werden. So muss bei hoher Belastung die in den Batteriemodulen entstehende Wärme abgeführt werden, um ein Überhitzen der Batterie zu verhindern. Bei niedrigen Außentemperaturen oder als Vorbereitung für den Aufladevorgang der Batteriemodule kann auch ein Erwärmen erforderlich sein.

Um eine entsprechende Temperierung der Batteriemodule zu gewährleisten, ist es im Stand der Technik bekannt Temperierplatten mit dem Batteriegehäuse zu verbinden. Die Temperierplatten weisen bevorzugt Fluidkanäle auf, durch die ein Temperierfluid strömt, welches Wärme von dem Batteriegehäuse und somit von dem in dem Batteriegehäuse angeordneten Batteriemodulen aufnehmen oder an diese abgeben kann.

Hinsichtlich der Ausgestaltung der Fluidzuführung der Temperieranordnungen gibt es in Stand der Technik unterschiedliche Konzepte. Beispielsweise offenbart die DE 10 2020 113 425 B3 ein Verbindungselement, welches mit einer Kanalöffnung des Fluidkanals und mit einer Fluidführung des Kraftfahrzeugs verbunden ist. Das Verbindungselement hat jedoch zwei wesentliche Nachteile. Zum einen gestaltet sich die Kopplung des Verbindungselements mit der Temperierplatte aufwendig und zum anderen ist die Fertigung des Verbindungselements aufgrund seiner Komplexität kostenaufwendig.

Die US 11 239 512 B2 offenbart eine Temperieranordnung gemäß dem Oberbegriff von Anspruch 1 und zeigt ein Gegenstromwärmetauscher mit seitlichen

### Anschlüssen.

Aus der US 10 608 305 B2 ist ein Gegenstromwärmetauscher mit Inline-Armaturen bekannt.

Weitere Stand der Technik wird durch die DE 10 2020 107 366 A1 und die US 11 155 150 B2 gebildet.

Ausgehend vom Stand der Technik ist daher die Aufgabe der vorliegenden Erfindung, eine verbesserte Temperieranordnung sowie ein Verfahren zu deren Herstellung bereitzustellen.

Der gegenständliche Teil dieser Aufgabe wird durch eine Temperieranordnung gemäß Anspruch 1 gelöst. Den verfahrenstechnischen Teil der Aufgabe löst das Verfahren zur Herstellung einer Temperieranordnung gemäß Anspruch 12**.**

Vorteilhafte Ausgestaltungen und Weiterbildungen der erfindungsgemäßen Temperieranordnung sind Gegenstand der abhängigen Ansprüche.

Die erfindungsgemäße Temperieranordnung umfasst ein Batteriegehäuse zur Aufnahme von Batteriemodulen für ein elektrisch angetriebenes Fahrzeug. Unter

Batteriemodulen werden im Rahmen der Erfindung auch Batterieelemente und/oder Batteriezellen verstanden.

Weiterhin umfasst die Temperieranordnung eine Temperierplatte, die mit dem Batteriegehäuse verbunden ist. Über die Temperierplatte können die im Batteriegehäuse angeordneten Batteriemodule temperiert, mithin gekühlt oder erwärmt werden. Dazu weist die Temperierplatte wenigstens einen Fluidkanal auf, wobei der Fluidkanal wenigstens eine Kanalöffnung aufweist, über die ein Temperierfluid in den Fluidkanal ein- bzw. ausgeführt werden kann.

Die Temperierplatte weist wenigstens eine Anschlussöffnung auf. Über die Anschlussöffnung kann die Temperierplatte mit einer Fluidführung des Kraftfahrzeugs verbunden werden. Erfindungswesentlich ist, dass eine Kappe mit der Temperierplatte gefügt ist, wobei die Kappe die Kanalöffnung und die Anschlussöffnung fluidleitend durch Ausbildung eines Überströmkanals verbindet. Das von der Fluidführung bereitgestellte Temperierfluid kann somit durch die Anschlussöffnung, den Überströmkanal und die Kanalöffnung in den Fluidkanal strömen. Eine umgekehrte Strömungsrichtung ist ebenfalls möglich.

Erfindungsgemäß liegen sich die Temperierplatte und die Kappe zumindest abschnittsweise in dem Überströmkanal gegenüber. Die Formgebung des Überströmkanals ist somit wesentlich von der Ausgestaltung der Kappe abhängig. Die Kappe, und damit der Überströmkanal, kann somit an bestimmte bautechnische oder strömungstechnische Vorgaben angepasst werden, ohne dass eine Anpassung der übrigen Bauteilkomponenten der Temperierplatte erforderlich ist. Die erfindungsgemäße Temperieranordnung bietet somit ein hohes Maß an Flexibilität im Hinblick auf die Gestaltung und Dimensionierung der Fluidzuführung und -abführung der Temperierplatte.

Die Kappe ist dabei bevorzugt einstückig aus einem Aluminium oder Edelstahlblech warm- oder kaltgeformt. Es handelt sich somit um ein einfach und kostengünstig herzustellendes Bauteil. Die Kappe ist vorzugsweise derart geformt, dass die äußere Kontur der Kappe bei erfindungsgemäßer Anordnung der Kappe auf der Temperierplatte nahtlos, mithin ohne Ausbildung eines Spalts, auf der Temperierplatte aufliegt. Dies vereinfacht den anschließenden Fügeprozess und sorgt für einen fluiddichten Sitz der Kappe auf der Temperierplatte.

Vorzugsweise weist die Kappe an ihrer äußeren Kontur eine Abflachung auf. Die Abflachung bietet eine geeignete Fügefläche für die Verschweißung der Kappe mit der Temperierplatte.

Die Temperierplatte und das Batteriegehäuse sind insbesondere aus Aluminium und/oder Edelstahl ausgebildet.

Bevorzugt wird der Fluidkanal durch das Batteriegehäuse begrenzt. Dies hat den Vorteil, dass das durch den Fluidkanal strömende Temperierungsfluid direkt mit dem Batteriegehäuse in Kontakt kommt. So wird ein optimaler Wärmeübergang zwischen dem Batteriegehäuse und dem Temperierfluid gewährleistet. Ein weiterer Vorteil ist, dass die Temperierplatte aus einem Werkstück bzw. Blech ausgebildet werden kann. Die Fluidkanäle der Temperierplatte können über einen Warm- oder einen Kaltformvorgang ausgebildet werden.

Alternativ ist die Temperierplatte als eine zumindest abschnittsweise doppelwandige Temperierplatte ausgebildet. In diesem Fall weist die Temperierplatte eine obere Platte und eine untere Platte auf, wobei der Fluidkanal durch die obere Platte begrenzt ist. Die Kanalöffnung ist bevorzugt in der oberen Platte ausgebildet. Die untere Platte der Temperierplatte liegt am Batteriegehäuse an. Diese Ausführungsvariante hat den Vorteil, dass das Temperierfluid nicht direkt mit dem Batteriegehäuse in Kontakt kommt. Die Wärmeübertragung erfolgt somit zwischen der unteren Platte und dem Batteriegehäuse. Dies kann beispielsweise vorteilhaft sein, wenn die Oberfläche des Batteriegehäuses nicht für einen Kontakt mit dem Temperierfluid ausgelegt ist.

Erfindungsgemäß ist die Temperierplatte umlaufend mit dem Batteriegehäuse unter Ausbildung einer ersten Schweißnaht verschweißt. Dabei befindet sich die erste Schweißnaht auf der dem Batteriegehäuse abgewandten Seite der Temperierplatte. Mittels einer entsprechenden Schweißverbindung kann ein sicherer Halt zwischen der Temperierplatte und dem Batteriegehäuse gewährleistet werden. Zudem handelt es sich um ein kostengünstiges Fügeverfahren.

Erfindungsgemäß bedeckt die Kappe die erste Schweißnaht, wobei die Kappe unter Ausbildung einer zweiten Schweißnaht fluiddicht mit der Temperierplatte verschweißt ist. Dies hat zur Folge, dass sich die erste Schweißnaht und die zweite Schweißnaht kreuzen. Die Tatsache, dass die Temperierplatte mit dem Batteriegehäuse verschweißt wird, bevor die Kappe auf der Temperierplatte angeordnet wird, hat den Vorteil, dass eine sichere Verbindung zwischen dem Batteriegehäuse und der Temperierplatte auch im Bereich der Kappe gewährleistet ist. Die äußere Kontur der Kappe kann zudem eine Aussparung aufweisen, dergestalt, dass eine etwaige über die Temperierplatte überstehende Wulst der ersten Schweißnaht bei Anordnung der Kappe auf der Temperierplatte in der Aussparung liegt.

Bevorzugt weist die Temperierplatte einen Vorsprung auf, der über das Batteriegehäuse hinausragt, wobei die wenigstens eine Anschlussöffnung innerhalb des Vorsprungs angeordnet ist. Somit kann die Fluidführung mit der Anschlussöffnung verbunden werden, ohne dass dies eine Erhöhung der Aufbauhöhe der Temperieranordnung zur Folge hat.

Dazu ist vorzugsweise ein Verbindungsstutzen mit der Anschlussöffnung verbunden. Über den Verbindungsstutzen wird die Anschlussöffnung mit der Fluidführung des Kraftfahrzeugs verbunden. Der Verbindungsstutzen erstreckt sich dabei insbesondere quer zu der dem Batteriegehäuse zugewandten Seite der Temperierplatte. Im Gegensatz zu gängigen Lösungen im Stand der Technik ragt der Verbindungsstutzen somit nicht über das Batteriegehäuse hinaus, sondern verläuft ausgehend von der Anschlussöffnung im Wesentlichen parallel zu einer Schmalseite des Batteriegehäuses. Die Aufbauhöhe der Temperieranordnung wird somit durch den Anschlussstutzen bzw. die daran angeschlossene Fluidführung nicht weiter erhöht. Diese Ausgestaltung löst somit eine weitere Aufgabe, nämlich ausgehend vom Stand der Technik eine Temperieranordnung mit einer möglichst geringen Aufbauhöhe bereitzustellen.

Bevorzugt weist die Temperierplatte zwei Anschlussöffnungen auf. In diesem Fall ist eine Anschlussöffnung als Fluideinlass und eine Anschlussöffnung als Fluidauslass ausgebildet. Weiterhin Bevorzugt weist der Fluidkanal zwei Kanalöffnungen auf, wobei eine Kanalöffnung als Fluideinlass und eine Kanalöffnung als Fluidauslass ausgebildet ist. In dieser Ausführungsvariante kann die Temperieranordnung zwei Kappen aufweisen. Eine Kappe verbindet die als Fluideinlass ausgebildete Anschlussöffnung mit der als Fluideinlass ausgebildeten Kanalöffnung fluidtechnisch. Die andere Kappe verbindet die als Fluidauslass ausgebildete Anschlussöffnung mit der als Fluidauslass ausgebildeten Kanalöffnung fluidtechnisch. Das Temperierfluid kann somit durch die als Fluideinlass ausgebildete Anschlussströmung in den Überströmkanal einströmen und durch die als Fluideinlass ausgebildete Kanalöffnung in den Fluidkanal gelangen. Nach der Temperierung des Batteriegehäuses strömt das erwärmte oder gekühlte Temperierfluid durch die als Fluidauslass ausgebildete Kanalöffnung in den durch die Temperierplatte und die zweite Kappe ausgebildeten zweiten Überströmkanal und von diesem durch die als Fluidauslass ausgebildete Anschlussöffnung zurück in die Fluidführung des Fahrzeugs. Mithin ist ein abgeschlossener Fluidkreislauf ausgebildet.

Weist die Temperieranordnung zwei Kappen auf, können diese materialeinheitlich verbunden sein. Dies vereinfacht zum einen die Anordnung der Kappen und zum anderen den Fügeprozess mit der Temperierplatte.

Sowohl der Fluidkanal als auch die Kappe weisen eine maximale Bauhöhe auf. Bevorzugt ist die maximale Bauhöhe der Kappe kleiner oder gleich der maximalen Bauhöhe des Fluidkanals. So wird durch die Kappe die Aufbauhöhe der Temperieranordnung nicht zusätzlich erhöht.

Vorzugsweise weist der Fluidkanal vor der Kanalöffnung eine Ausbuchtung auf. In dieser Ausbuchtung liegt bevorzugt die maximale Bauhöhe des Fluidkanals. Ausgehend vom Punkt der maximalen Bauhöhe nimmt diese insbesondere linear ab, bis der Fluidkanal endet bzw. die Temperierplatte mit dem Batteriegehäuse zur Anlage kommt. Mithin ist ein abgeschrägter Bereich des Fluidkanals ausgebildet. Die Kanalöffnung ist bevorzugt in diesem angeschrägten Bereich des Fluidkanals angeordnet. Dies hat sich besonders Vorteilhaft für die Fluidführung als auch für das Fügen der Kappe herausgestellt.

Zwischen dem abgeschrägten Bereich des Fluidkanals und dem Batteriegehäuse ist bevorzugt einen Winkel zwischen 5° und 30°, besonders bevorzugt zwischen 15° und 25° ausgebildet.

Die erfindungsgemäße Temperieranordnung kann mit einem Verfahren hergestellt werden, welches die nachfolgend beschriebenen Schritte umfasst.

Zunächst wird das Batteriegehäuse bereitgestellt. Anschließend wird die Temperierplatte an dem Batteriegehäuse angeordnet, wobei die Temperierplatte einen Fluidkanal aufweist, der Fluidkanal eine Kanalöffnung aufweist und die Temperierplatte eine Anschlussöffnung aufweist.

In einem nächsten Schritt wird die Temperierplatte umlaufend mit dem Batteriegehäuse unter Ausbildung der ersten Schweißnaht verschweißt. Die Schweißnaht befindet sich auf der dem Batteriegehäuse abgewandten Seite der Temperierplatte.

Anschließend wird die Kappe auf der Temperierplatte angeordnet, wobei die Kappe die erste Schweißnaht teilweise bedeckt und die Kappe die Kanalöffnung und die Anschlussöffnung unter Ausbildung eines Überströmkanals fluidtechnisch verbindet.

Die Kappe wird umlaufend und fluiddicht mit der Temperierplatte unter Ausbildung der zweiten Schweißnaht verschweißt. Dies hat zur Folge, dass sich die erste Schweißnaht und die zweite Schweißnaht kreuzen.

Die Erfindung ist nachfolgend anhand von in den Zeichnungen dargestellten Ausführungsbeispielen näher beschrieben. Es zeigen:
- Figur 1: eine erfindungsgemäße Temperieranordnung in einer Perspektive,
- Figur 2: die erfindungsgemäße Temperieranordnung in einer Schnittdarstellung und
- Figur 3: eine Ausführungsvariante der Kappe.

In den Figuren werden für gleiche oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

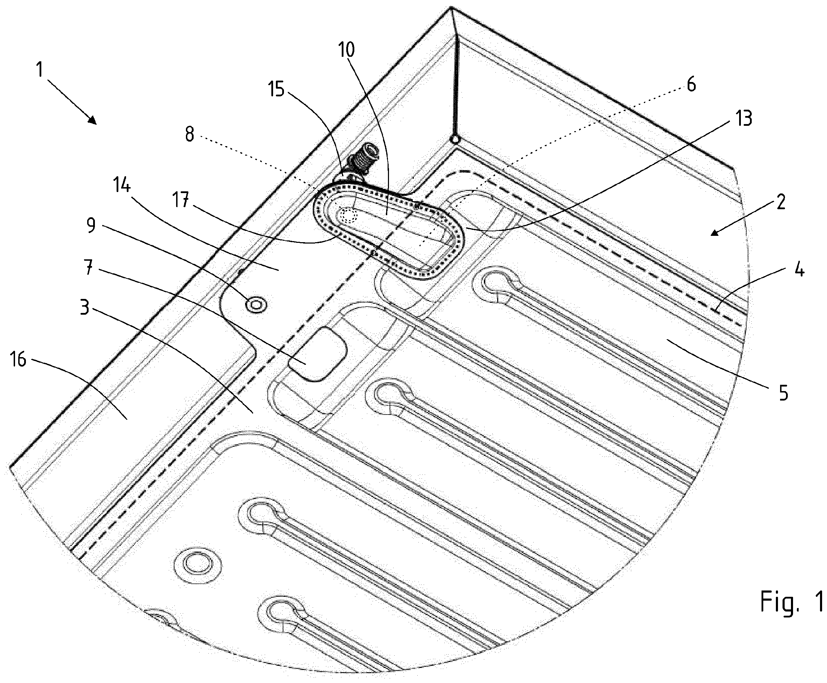

Figur 1 zeigt eine erfindungsgemäße Temperieranordnung 1, welche ein Batteriegehäuse 2 zur Aufnahme von Batteriemodulen für ein elektrisch angetriebenes Fahrzeug umfasst. Das Batteriegehäuse 2 ist unterhalb eines Fahrzeuginnenraums und zwischen den Achsen eines hier nicht dargestellten elektrisch angetriebenen Fahrzeugs angeordnet.

Die Temperieranordnung 1 umfasst ferner eine Temperierplatte 3. Die Temperierplatte 3 ist umlaufend mit der dem Fahrzeug abgewandten Seite des Batteriegehäuses 2, mithin der Unterseite des Batteriegehäuses 2, unter Ausbildung einer ersten Schweißnaht 4 verschweißt. Die erste Schweißnaht 4 befindet sich auf der dem Batteriegehäuse 2 abgewandten Seite der Temperierplatte 3.

Die Temperierplatte 3 weist einen Fluidkanal 5 auf, welcher eine als Fluideinlass ausgebildete Kanalöffnung 6 und eine als Fluidauslass ausgebildete Kanalöffnung 7 aufweist.

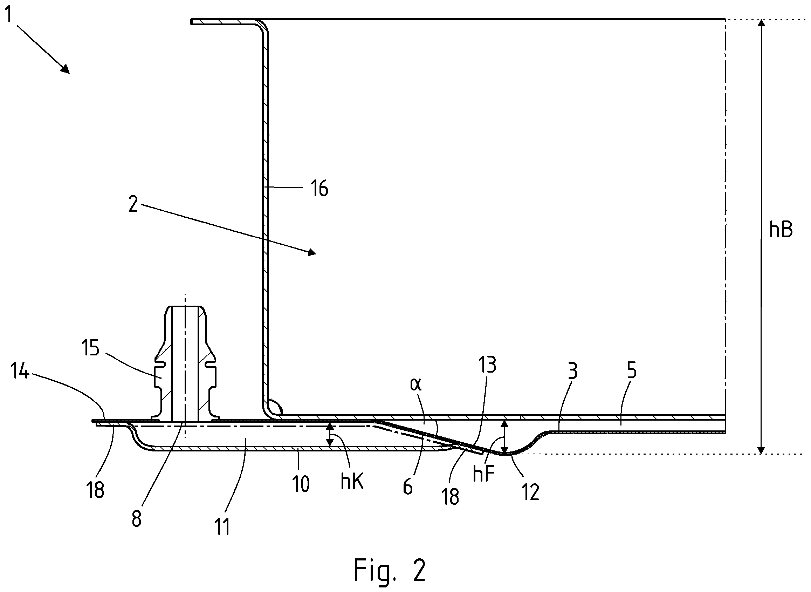

Die Temperierplatte 3 weist weiterhin eine als Fluideinlass ausgebildete Anschlussöffnung 8 sowie eine als Fluidauslass ausgebildete Anschlussöffnung 9 auf. Erfindungsgemäß ist eine Kappe 10 mit der Temperierplatte 3 gefügt, wobei die Kappe 10 die als Fluideinlass ausgebildete Kanalöffnung 6 und die als Fluideinlass ausgebildete Anschlussöffnung 8 fluidleitend durch Ausbildung eines Überströmkanals 11 verbindet. Der durch die Kappe 10 und die Temperierplatte 3 ausgebildete Überströmkanal 11 ist insbesondere auch in der Schnittdarstellung in Figur 2 zu sehen. Aus Darstellungsgründen ist in dem gezeigten Ausführungsbeispiel in Figur 1 lediglich an den Einlassöffnungen 6, 8 eine Kappe 10 angeordnet und nicht an den Auslassöffnungen 7, 9.

Das in den Figuren nicht dargestellte Temperierfluid kann durch die als Fluideinlass ausgebildete Anschlussöffnung 8 in den Überströmkanal 11 einströmen und durch die als Fluideinlass ausgebildete Kanalöffnung 6 in den Fluidkanal 5 gelangen. Nach der Temperierung des Batteriegehäuses 2 strömt das erwärmte oder gekühlte Temperierfluid durch die als Fluidauslass ausgebildete Kanalöffnung 7 in den durch die Temperierplatte 3 und die nicht dargestellte zweite Kappe ausgebildeten zweiten Überströmkanal und von diesem durch die als Fluidauslass ausgebildete Anschlussöffnung 9 zurück in die Fluidführung des Fahrzeugs. Mithin ist ein abgeschlossener Fluidkreislauf zum Kühlen oder Erwärmen der in dem Batteriegehäuse 2 befindlichen Batteriemodule ausgebildet.

Die Formgebung des Überströmkanals 11 ist wesentlich von der Ausgestaltung der Kappe 10 geprägt. Die Kappe 10, und damit der Überströmkanal 11, kann somit an bestimmte bautechnische oder strömungstechnische Vorgaben angepasst werden, ohne dass eine Anpassung der übrigen Bauteilkomponenten der Temperierplatte 3 erforderlich ist. Die erfindungsgemäße Temperieranordnung 1 bietet somit ein hohes Maß an Flexibilität im Hinblick auf die Gestaltung und Dimensionierung der Fluidzuführung der Temperierplatte 3.

Der Fluidkanal 5 weist vor der jeweiligen Kanalöffnung 6, 7 eine Ausbuchtung 12 auf. In dieser Ausbuchtung 12 weist der Fluidkanals 5 seine maximale Bauhöhe hF auf. Ausgehend vom Punkt der maximalen Bauhöhe hF nimmt die Bauhöhe des Fluidkanals 5 linear ab, bis der Fluidkanal 5 endet bzw. die Temperierplatte 3 mit dem Batteriegehäuse 2 zur Anlage kommt. Mithin ist ein abgeschrägter Bereich 13 ausgebildet. Die Kanalöffnungen 6, 7 sind in dem abgeschrägten Bereich 13 des Fluidkanals 5 angeordnet. Dies hat sich besonders Vorteilhaft für die Fluidführung als auch für das Fügen der Kappe 10 herausgestellt.

Zwischen dem abgeschrägten Bereich 13 des Fluidkanals 5 und dem Batteriegehäuse 2 ist bevorzugt einen Winkel α zwischen 5° und 30°, besonders bevorzugt zwischen 15° und 25° ausgebildet.

Der Fluidkanal 5 wird durch das Batteriegehäuse 2 begrenzt. Das im Fluidkanal 5 strömende und nicht näher dargestellte Temperierfluid kommt somit direkt mit dem Batteriegehäuse 2 in Kontakt. Dies sorgt für eine optimale Wärmeübertragung zwischen dem Temperierfluid und dem Batteriegehäuse 2.

Figur 2 zeigt ferner, dass sich die Temperierplatte 3 und die Kappe 10 erfindungsgemäß zumindest abschnittsweise in dem Überströmkanal 11 gegenüberliegen. Die Temperierplatte 3 dichtet den Fluidkanal 5 seitlich und auf Figur 2 bezogen nach unten hin ab. Die Oberseite des Fluidkanals 5 wird durch das Batteriegehäuse 2 abgedeckt. Auf der dem Fluidkanal 5 abgewandten Seite des abgeschrägten Bereichs 13 liegt die Temperierplatte 3 am Batteriegehäuse 2 an und ist mit diesem verschweißt. Die Temperierplatte 3 deckt hier die Oberseite des durch die Kappe 10 ausgebildeten Überströmkanal 11 ab. Relativ zum strömenden Temperierfluid findet somit eine Verlagerung der Temperierplatte 3 von der Oberseite des Überströmkanals 11 zur Unterseite des Fluidkanals 5 statt.

Die Temperierplatte 3 weist einen Vorsprung 14 auf, der über das Batteriegehäuse 2 hinausragt. Beide Anschlussöffnungen 8, 9 sind innerhalb des Vorsprungs 14 angeordnet.

Die Anschlussöffnungen 8, 9 sind jeweils mit einem Verbindungsstutzen 15 verbunden. Die Verbindungsstutzen 15 sind mit einer nicht näher dargestellten Fluidführung des Kraftfahrzeugs verbunden.

Die Verbindungsstutzen 15 erstrecken sich jeweils quer zu der dem Batteriegehäuse 2 zugewandten Seite der Temperierplatte 3. Im hier gezeigten Ausführungsbeispiel verlaufen die Verbindungsstutzen 15 im Wesentlichen parallel zu einer Schmalseite 16 des Batteriegehäuses 2. Die Temperieranordnung 1 bietet somit den weiteren Vorteil, dass die die Ausgestaltung des Fluidzuführungs- und Fluidabführungskonzepts die Aufbauhöhe hB der Temperieranordnung 1 nicht zusätzlich erhöht.

Die Kappe 10 bedeckt die erste Schweißnaht 4 teilweise, wobei die Kappe 10 unter Ausbildung einer zweiten Schweißnaht 17 fluiddicht mit der Temperierplatte 3 verschweißt ist. Die erste Schweißnaht 4 und die zweite Schweißnaht 17 kreuzen sich. In Figur 1 ist die erste Schweißnaht 4 aus Darstellungsgründen durch die Kappe 10 hindurch sichtbar. Durch die nachträgliche Anordnung der Kappe 10 auf der ersten Schweißnaht 4 kann eine sichere Verbindung der Temperierplatte 3 mit dem Batteriegehäuse 2 auch im Bereich des Überströmkanals 11 sichergestellt werden.

Die Kappe 10 weist an ihrer äußeren Kontur eine Abflachung 18 auf. Die Abflachung 18 bietet eine geeignete Fügefläche für die Verschweißung der Kappe 10 mit der Temperierplatte 3.

Der Fluidkanal 5 weist eine maximale Bauhöhe hF auf und die Kappe 10 eine maximale Bauhöhe hK. Die maximale Bauhöhe hK der Kappe 10 ist im gezeigten Ausführungsbeispiel kleiner als die maximale Bauhöhe hF des Fluidkanals 5. Dies hat ebenfalls den Vorteil, dass die Aufbauhöhe hB der Temperieranordnung 1 nicht zusätzlich erhöht wird.

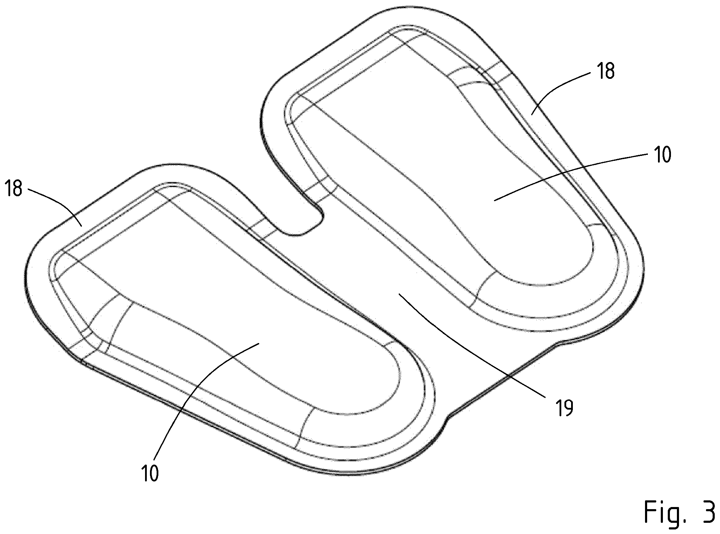

Weist die Temperieranordnung 1 zwei Kappen 10 auf, können diese materialeinheitlich verbunden oder einstückig ausgebildet sein. Eine entsprechende Ausgestaltung ist in Figur 3 gezeigt. Die zwei Kappen 10 sind einstückig ausgebildet und über einen Verbindungssteg 19 miteinander verbunden. Dies vereinfacht zum einen die Anordnung der Kappen 10 auf der Temperierplatte 3 und zum anderen den Fügeprozess der Kappen 10 mit der Temperierplatte 3.

### Bezugszeichen:

- 1 -: Temperieranordnung
- 2 -: Batteriegehäuse
- 3 -: Temperierplatte
- 4 -: erste Schweißnaht
- 5 -: Fluidkanal
- 6 -: Kanalöffnung
- 7 -: Kanalöffnung
- 8 -: Anschlussöffnung
- 9 -: Anschlussöffnung
- 10 -: Kappe
- 11 -: Überströmkanal
- 12 -: Ausbuchtung
- 13 -: abgeschrägter Bereich
- 14 -: Vorsprung
- 15 -: Verbindungsstutzen
- 16 -: Schmalseite
- 17 -: zweite Schweißnaht
- 18 -: Abflachung
- 19 -: Verbindungssteg

- hB -: Aufbauhöhe
- hK -: maximale Höhe Fluidkanal
- hF -: maximale Höhe Kappe

## Patentansprüche

1. Temperieranordnung (1) umfassend
ein Batteriegehäuse (2) zur Aufnahme von Batteriemodulen für ein elektrisch angetriebenes Fahrzeug und
eine Temperierplatte (3), wobei die Temperierplatte (3) wenigstens einen Fluidkanal (5) aufweist und der Fluidkanal (5) wenigstens eine Kanalöffnung (6, 7) aufweist, wobei die Temperierplatte (3) mit dem Batteriegehäuse (2) verbunden ist, wobei die Temperierplatte (3) wenigstens eine Anschlussöffnung (8, 9) aufweist, wobei eine Kappe (10) mit der Temperierplatte (3) gefügt ist und die Kappe (10) die Kanalöffnung (6, 7) und die Anschlussöffnung (8, 9) fluidleitend durch Ausbildung eines Überströmkanals (11) verbindet, wobei sich die Temperierplatte (3) und die Kappe (10) zumindest abschnittsweise in dem Überströmkanal (11) gegenüberliegen, **dadurch gekennzeichnet, dass** die Temperierplatte (3) umlaufend mit dem Batteriegehäuse (2) unter Ausbildung einer ersten Schweißnaht (4) verschweißt ist und sich die erste Schweißnaht (4) auf der dem Batteriegehäuse (2) abgewandten Seite der Temperierplatte (3) befindet, wobei die Kappe (10) die erste Schweißnaht (4) teilweise bedeckt, wobei die Kappe (10) unter Ausbildung einer zweiten Schweißnaht (17) fluiddicht mit der Temperierplatte (3) verschweißt ist, dergestalt, dass sich die erste Schweißnaht (4) und die zweite Schweißnaht (17) kreuzen.

2. Temperieranordnung (1) nach Anspruch 1, **dadurch gekennzeichnet, dass** der Fluidkanal (5) durch das Batteriegehäuse (2) begrenzt wird.

3. Temperieranordnung (1) nach Anspruch 1, **dadurch gekennzeichnet, dass** die Temperierplatte (3) als eine zumindest abschnittsweise doppelwandige Temperierplatte (3) ausgebildet ist, welche eine obere Platte und eine untere Platte aufweist, wobei der Fluidkanal (5) durch die obere Platte und die untere Platte begrenzt ist und die Kanalöffnung (6, 7) in der oberen Platte ausgebildet ist.

4. Temperieranordnung (1) nach einem der Ansprüche 1 bis 3, **dadurch gekennzeichnet, dass** die Temperierplatte (3) einen Vorsprung (14) aufweist, der über das Batteriegehäuse (2) hinausragt, wobei die wenigstens eine Anschlussöffnung (8, 9) innerhalb des Vorsprungs (14) angeordnet ist.

5. Temperieranordnung (1) nach einem der Ansprüche 1 bis 4, **dadurch gekennzeichnet, dass** die Temperierplatte (3) zwei Anschlussöffnungen (8, 9) aufweist, wobei eine Anschlussöffnung (8) als Fluideinlass und eine Anschlussöffnung (9) als Fluidauslass ausgebildet ist.

6. Temperieranordnung (1) nach einem der Ansprüche 1 bis 5, **dadurch gekennzeichnet, dass** der Fluidkanal (5) zwei Kanalöffnungen (6, 7) aufweist, wobei eine Kanalöffnung (6) als Fluideinlass und eine Kanalöffnung (7) als Fluidauslass ausgebildet ist.

7. Temperieranordnung (1) nach Anspruch 5 und 6, **dadurch gekennzeichnet, dass** die Temperieranordnung (1) zwei Kappen (10) aufweist, wobei eine Kappe (10) die als Fluideinlass ausgebildete Anschlussöffnung (8) mit der als Fluideinlass ausgebildeten Kanalöffnung (6) fluidtechnisch verbindet und eine Kappe (10) die als Fluidauslass ausgebildete Anschlussöffnung (9) mit der als Fluidauslass ausgebildeten Kanalöffnung (7) fluidtechnisch verbindet.

8. Temperieranordnung (1) nach Anspruch 7, **dadurch gekennzeichnet, dass** die zwei Kappen (10) materialeinheitlich verbunden sind.

9. Temperieranordnung (1) nach einem der Ansprüche 1 bis 8, **dadurch gekennzeichnet, dass** ein Verbindungsstutzen (15) mit der Anschlussöffnung (8, 9) verbunden ist.

10. Temperieranordnung (1) nach Anspruch 9, **dadurch gekennzeichnet, dass** sich der Verbindungsstutzen (15) quer zu der dem Batteriegehäuse (2) zugewandten Seite der Temperierplatte (3) erstreckt.

11. Temperieranordnung (1) nach einem der Ansprüche 1 bis 10, **dadurch gekennzeichnet, dass** der Fluidkanal (5) eine maximale Bauhöhe (hF) aufweist und die Kappe (10) eine maximale Bauhöhe (hK) aufweist, wobei die maximale Bauhöhe der Kappe (10) kleiner oder gleich der maximalen Bauhöhe des Fluidkanals (5) ist.

12. Verfahren zur Herstellung einer Temperieranordnung (1) gemäß einem der Ansprüche 1 bis 11, wobei das Verfahren die folgenden Schritte umfasst:
• Bereitstellen eines Batteriegehäuses (2) zur Aufnahme von Batteriemodulen für ein elektrisch angetriebenes Fahrzeug,
einer Temperierplatte (3), wobei die Temperierplatte (3) einen Fluidkanal (5) aufweist, der Fluidkanal (5) eine Kanalöffnung (6, 7) aufweist und die Temperierplatte (3) eine Anschlussöffnung (8, 9) aufweist und einer Kappe (10),
• Anordnung der Temperierplatte (3) an dem Batteriegehäuse (2),
• umlaufende Verschweißung der Temperierplatte (3) mit dem Batteriegehäuse (2) unter Ausbildung einer ersten Schweißnaht (4), wobei sich die erste Schweißnaht (4) auf der dem Batteriegehäuse (2) abgewandten Seite der Temperierplatte (3) befindet,
• Anordnung der Kappe (10) auf der Temperierplatte (3), wobei die Kappe (10) die erste Schweißnaht (4) teilweise bedeckt und die Kappe (10) die Kanalöffnung (6, 7) und die Anschlussöffnung (8, 9) unter Ausbildung eines Überströmkanals (11) fluidtechnisch verbindet und
• umlaufende fluiddichte Verschweißung der Kappe (10) mit der Temperierplatte (3) unter Ausbildung einer zweiten Schweißnaht (17), dergestalt, dass sich die erste Schweißnaht (4) und die zweite Schweißnaht (17) kreuzen.

## Claims

1. Temperature control arrangement (1), comprising
a battery housing (2) for accommodating battery modules for an electrically powered vehicle, and
a temperature control plate (3), wherein the temperature control plate (3) has at least one fluid channel (5) and the fluid channel (5) has at least one channel opening (6, 7), wherein the temperature control plate (3) is connected to the battery housing (2), wherein the temperature control plate (3) has at least one connection opening (8, 9), wherein a cap (10) is joined to the temperature control plate (3) and the cap (10) connects the channel opening (6, 7) and
the connection opening (8, 9) in a fluid-conducting manner by forming an overflow channel (11), wherein the temperature control plate (3) and the cap (10) are opposite one another at least in some sections in the overflow channel (11), **characterised in that**
the temperature control plate (3) is welded circumferentially to the battery housing (2) to form a first weld seam (4), and the first weld seam (4) is located on the side of the temperature control plate (3) facing away from the battery housing (2), wherein the cap (10) partially covers the first weld seam (4), wherein
the cap (10) is welded to the temperature control plate (3) in a fluid-tight manner to form a second weld seam (17), such that the first weld seam (4) and the second weld seam (17) intersect.

2. Temperature control arrangement (1) according to claim 1, **characterised in that** the fluid channel (5) is delimited by the battery housing (2).

3. Temperature control arrangement (1) according to claim 1, **characterised in that** the temperature control plate (3) is configured as a temperature control plate (3) which is at least partially double-walled and has an upper plate and a lower plate, wherein the fluid channel (5) is delimited by the upper plate and the lower plate and the channel opening (6, 7) is formed in the upper plate.

4. Temperature control arrangement (1) according to any one of claims 1 to 3, **characterised in that** the temperature control plate (3) has a projection (14) which projects beyond the battery housing (2), wherein the at least one connection opening (8, 9) is arranged within the projection (14).

5. Temperature control arrangement (1) according to any one of claims 1 to 4, **characterised in that** the temperature control plate (3) has two connection openings (8, 9), wherein one connection opening (8) is configured as a fluid inlet and one connection opening (9) is configured as a fluid outlet.

6. Temperature control arrangement (1) according to any one of claims 1 to 5, **characterised in that** the fluid channel (5) has two channel openings (6, 7), wherein one channel opening (6) is configured as fluid inlet and one channel opening (7) is configured as fluid outlet.

7. Temperature control arrangement (1) according to claim 5 and 6, **characterised in that** the temperature control arrangement (1) has two caps (10), wherein one cap (10) fluidically connects the connection opening (8), configured as fluid inlet, to the channel opening (6), configured as fluid inlet, and one cap (10) fluidically connects the connection opening (9), configured as fluid outlet, to the channel opening (7), configured as fluid outlet.

8. Temperature control arrangement (1) according to claim 7, **characterised in that** the two caps (10) are connected using the same material.

9. Temperature control arrangement (1) according to any one of claims 1 to 8, **characterised in that** a connecting piece (15) is connected to the connection opening (8, 9).

10. Temperature control arrangement (1) according to claim 9, **characterised in that** the connecting piece (15) extends transversely to the side of the temperature control plate (3) facing the battery housing (2).

11. Temperature control arrangement (1) according to any one of claims 1 to 10, **characterised in that** the fluid channel (5) has a maximum construction height (hF) and the cap (10) has a maximum construction height (hK), wherein the maximum construction height of the cap (10) is smaller than or equal to the maximum construction height of the fluid channel (5).

12. Method for producing a temperature control arrangement (1) according to any one of claims 1 to 11, wherein the method comprises the following steps:
• providing a battery housing (2) for accommodating battery modules for an electrically powered vehicle,
a temperature control plate (3), wherein the temperature control plate (3) has a fluid channel (5), the fluid channel (5) has a channel opening (6, 7) and the temperature control plate (3) has a connection opening (8, 9), and a cap (10),
• arranging the temperature control plate (3) on the battery housing (2),
• circumferentially welding the temperature control plate (3) to the battery housing (2) to form a first weld seam (4), wherein the first weld seam (4) is located on the side of the temperature control plate (3) facing away from the battery housing (2),
• arranging the cap (10) on the temperature control plate (3), wherein the cap (10) partially covers the first weld seam (4) and the cap (10) fluidically connects the channel opening (6, 7) and the connection opening (8, 9) to form an overflow channel (11), and
• welding the cap (10) to the temperature control plate (3) in a circumferentially fluid-tight manner to form a second weld seam (17), such that the first weld seam (4) and the second weld seam (17) intersect.

## Revendications

1. Ensemble de régulation de température (1) comprenant
un boîtier de batterie (2) pour recevoir des modules de batterie pour un véhicule à propulsion électrique et
une plaque de régulation de température (3), dans lequel la plaque de régulation de température (3) présente au moins un canal de fluide (5) et le canal de fluide (5) présente au moins une ouverture (6, 7) de canal, dans lequel la plaque de régulation de température (3) est reliée au boîtier de batterie (2), dans lequel la plaque de régulation de température (3) présente au moins une ouverture de raccordement (8, 9), dans lequel un couvercle (10) est relié à la plaque de régulation de température (3) et le couvercle (10) relie l'ouverture (6, 7) de canal et l'ouverture de raccordement (8, 9) de manière à acheminer le fluide par la formation d'un canal de trop-plein (11), dans lequel la plaque de régulation de température (3) et le couvercle (10) sont opposés au moins partiellement dans le canal de trop-plein (11), **caractérisé en ce que** la plaque de régulation de température (3) est soudée sur tout le pourtour au boîtier de batterie (2) en formant un premier cordon de soudure (4) et le premier cordon de soudure (4) se trouve sur le côté de la plaque de régulation de température (3) opposé au boîtier de batterie (2), dans lequel le couvercle (10) recouvre partiellement le premier cordon de soudure (4), dans lequel le couvercle (10) est soudé à la plaque de régulation de température (3) de manière étanche aux fluides en formant un second cordon de soudure (17) de sorte que le premier cordon de soudure (4) et le second cordon de soudure (17) se croisent.

2. Ensemble de régulation de température (1) selon la revendication 1, **caractérisé en ce que** le canal de fluide (5) est limité par le boîtier de batterie (2).

3. Ensemble de régulation de température (1) selon la revendication 1, **caractérisé en ce que** la plaque de régulation de température (3) est formée en tant que plaque de régulation de température (3) à double paroi au moins par sections, qui présente une plaque supérieure et une plaque inférieure, dans lequel le canal de fluide (5) est limité par la plaque supérieure et la plaque inférieure et l'ouverture (6, 7) de canal est formée dans la plaque supérieure.

4. Ensemble de régulation de température (1) selon l'une quelconque des revendications 1 à 3, **caractérisé en ce que** la plaque de régulation de température (3) présente une saillie (14) qui dépasse du boîtier de batterie (2), dans lequel l'au moins une ouverture de raccordement (8, 9) est agencée à l'intérieur de la saillie (14).

5. Ensemble de régulation de température (1) selon l'une quelconque des revendications 1 à 4, **caractérisé en ce que** la plaque de régulation de température (3) présente deux ouvertures de raccordement (8, 9), dans lequel une ouverture de raccordement (8) est formée comme entrée de fluide et une ouverture de raccordement (9) comme sortie de fluide.

6. Ensemble de régulation de température (1) selon l'une quelconque des revendications 1 à 5, **caractérisé en ce que** le canal de fluide (5) présente deux ouvertures de canal (6, 7), dans lequel une ouverture de canal (6) est formée comme entrée de fluide et une ouverture de canal (7) comme sortie de fluide.

7. Ensemble de régulation de température (1) selon les revendications 5 et 6, **caractérisé en ce que** l'ensemble de régulation de température (1) présente deux couvercles (10), dans lequel un couvercle (10) relie de manière fluidique l'ouverture de raccordement (8) formée comme entrée de fluide à l'ouverture de canal (6) formée comme entrée de fluide et un couvercle (10) relie de manière fluidique l'ouverture de raccordement (9) formée comme sortie de fluide à l'ouverture de canal (7) formée comme sortie de fluide.

8. Ensemble de régulation de température (1) selon la revendication 7, **caractérisé en ce que** les deux couvercles (10) sont reliés dans le même matériau.

9. Ensemble de régulation de température (1) selon l'une quelconque des revendications 1 à 8, **caractérisé en ce qu'**une tubulure de raccordement (15) est reliée à l'ouverture de raccordement (8, 9).

10. Ensemble de régulation de température (1) selon la revendication 9, **caractérisé en ce que** la tubulure de raccordement (15) s'étend transversalement au côté de la plaque de régulation de température (3) orienté vers le boîtier de batterie (2).

11. Ensemble de régulation de température (1) selon l'une quelconque des revendications 1 à 10, **caractérisé en ce que** le canal de fluide (5) présente une hauteur de construction maximale (hF) et le couvercle (10) présente une hauteur de construction maximale (hK), dans lequel la hauteur de construction maximale du couvercle (10) est inférieure ou égale à la hauteur de construction maximale du canal de fluide (5).

12. Procédé de fabrication d'un ensemble de régulation de température (1) selon l'une quelconque des revendications 1 à 11, dans lequel le procédé comprend les étapes suivantes :
• prévoir un boîtier de batterie (2) pour recevoir des modules de batterie pour un véhicule à propulsion électrique,
une plaque de régulation de température (3), dans lequel la plaque de régulation de température (3) présente un canal de fluide (5), le canal de fluide (5) présente une ouverture (6, 7) de canal et la plaque de régulation de température (3) présente une ouverture de raccordement (8, 9) et un couvercle (10),
• agencer la plaque de régulation de température (3) au niveau du boîtier de batterie (2),
• souder la plaque de régulation de température (3) au boîtier de batterie (2) sur tout le pourtour, en formant un premier cordon de soudure (4), dans lequel le premier cordon de soudure (4) se trouve sur le côté de la plaque de régulation de température (3) opposé au boîtier de batterie (2),
• agencer le couvercle (10) sur la plaque de régulation de température (3), dans lequel le couvercle (10) recouvre partiellement le premier cordon de soudure (4) et le couvercle (10) relie de manière fluidique l'ouverture (6, 7) de canal et l'ouverture de raccordement (8, 9) en formant un canal de trop-plein (11) et
• souder le couvercle (10) à la plaque de régulation de température (3) de façon étanche aux fluides, sur tout le pourtour, en formant un second cordon de soudure (17) de sorte que le premier cordon de soudure (4) et le second cordon de soudure (17) se croisent.
